(19) Europäisches Patentamt

European Patent Office

Office européen des brevets

(11) Veröffentlichungsnummer: **0 501 096 B1**

(12) **EUROPÄISCHE PATENTSCHRIFT**

(45) Veröffentlichungstag der Patentschrift: **14.12.94**

(51) Int. Cl.⁵: **F16C 3/06**, F16F 15/24

(21) Anmeldenummer: **91890258.6**

(22) Anmeldetag: **29.10.91**

(54) **Kurbelwelle.**

(30) Priorität: **26.02.91 AT 403/91**

(43) Veröffentlichungstag der Anmeldung:
**02.09.92 Patentblatt 92/36**

(45) Bekanntmachung des Hinweises auf die
Patenterteilung:
**14.12.94 Patentblatt 94/50**

(84) Benannte Vertragsstaaten:
**DE FR GB IT**

(56) Entgegenhaltungen:
**CH-A- 125 793**
**DE-A- 2 522 591**
**DE-A- 2 834 666**
**FR-A- 428 243**

(73) Patentinhaber: **AVL Gesellschaft für Verbrennungskraftmaschinen und Messtechnik
mbH.Prof.Dr.Dr.h.c. Hans List
Kleiststrasse 48
A-8020 Graz (AT)**

(72) Erfinder: **Altendorfer, Helmut, Dipl.-Ing.
Schubertstrasse 8
A-4400 Steyr (AT)**

(74) Vertreter: **Krause, Walter, Dr. Dipl.-Ing. et al
Postfach 200
Singerstrasse 8
A-1010 Wien (AT)**

EP 0 501 096 B1

## Beschreibung

Die Erfindung betrifft eine Kurbelwelle, insbesonders für einen Fünfzylinder-Reihenmotor, bei der fünf Kröpfungen in Richtung der Kurbelwellenachse gesehen, in der Reihenfolge 1, 4, 3, 2, 5 aufeinanderfolgen, wobei 1 und 5 die beiden äußeren Kröpfungen, 2 und 4 die beiden inneren Kröpfungen und 3 die mittlere Kröpfung darstellen und bei der die Kröpfungen 1, 2, 3, 4, 5 ungleichmäßig große Winkel zueinander einschließen.

Bei schnellaufenden Brennkraftmaschinen mit fünf Zylindern stellt sich das Problem, einen möglichst weitgehenden Ausgleich der freien Massenkräfte und Massenmomente zu schaffen. Bei einer Kurbelwelle mit fünf Kröpfungen, die mit gleicher Winkelteilung von 72° gegeneinander angeordnet sind, verschwinden zwar die oszillierenden Massenkräfte erster Ordnung, jedoch treten störende oszillierende Massenmomente erster Ordnung auf. Die oszillierenden Massenmomente lassen sich zwar durch Anordnung spezieller Gegengewichte an der Kurbelwelle etwas verringern, nicht jedoch vollständig beseitigen.

Die Erfindung betrifft auch Kurbelwellen mit fünf Kröpfungen für sämtliche andere Arbeitsmaschinen, also beispielsweise Pumpen, Kompressoren od. dgl. Weiters werden von der Erfindung auch Kurbelwellen von Maschinen mit zehn Zylindern, die in zwei Reihen angeordnet sind, mitumfaßt.

Aus SCHRÖN, Hans: "Zur Analyse und Synthese der Kurbelwellen mit kleinsten Massenmomenten bei Verbrennungsmotoren" sind Kurbelwellen bekannt, bei denen die Kröpfungen ungleiche Winkelabstände voneinander aufweisen. Mit den gezeigten Kurbelwellen gelingt es zwar, die Massenmomente erster Ordnung zum Verschwinden zu bringen, allerdings treten dabei oszillierende Massenkräfte erster Ordnung auf, die mindestens ebenso störend sind und dazu geführt haben, daß sich keine dieser Lösungen in der Praxis durchgesetzt hat.

Weiters ist aus der DE-B-1 142 727 eine Massenausgleichsanordnung für Fünfzylinder-Reihenmaschinen bekannt, wobei die Kröpfungen in der Reihenfolge 1, 3, 5, 4, 2 aufeinanderfolgen und deren, Winkelstellungen geringfügig ungleichmäßig sein können. Mittels zweier Ausgleichswellen kann bei dieser bekannten Brennkraftmaschine ein angenäherter Kräfte- und Momentenausgleich erster und zweiter Ordnung erreicht werden. Ohne diese Ausgleichswellen ist jedoch ein Ausgleich der Massenkräfte und Massenmomente erster Ordnung nicht möglich.

Überdies ist aus der DE-C-25 22 591 eine Kurbelwelle für Siebenzylindermaschinen bekannt, bei der ein Ausgleich von freien Massenkräften und Momenten durch eine unregelmäßige Winkelteilung angestrebt wird. Die gefunde Lösung ist jedoch für Fünfzylindermotoren nicht anwendbar.

Aufgabe der vorliegenden Erfindung ist es, eine Kurbelwelle zu schaffen, die einen vollständigen Ausgleich aller freien Massenkräfte und Massenmomente erster Ordnung ermöglicht, ohne Ausgleichswellen vorsehen zu müssen.

Erfindungsgemäß wird dies dadurch erreicht, daß der Winkel jeder der beiden inneren Kröpfungen 2 und 4 zur mittleren Kröpfung 3 um einen kleinen Winkel $\alpha$ kleiner ist als 72° und daß der Winkel jeder der beiden äußeren Kröpfungen 1 und 5 zur mittleren Kröpfung 3 um einen kleinen Winkel $\beta$ größer ist als 144°. Überraschenderweise wurde gefunden, daß damit sowohl die Massenkräfte als auch die Massenmomente erster Ordnung zum Verschwinden gebracht werden können, wenn man den Winkel zwischen den beiden äußeren Kröpfungen etwas verkleinert und gleichzeitig auch die Winkel der beiden inneren Kröpfungen zur mittleren Kröpfung geringfügig reduziert. Als Ausgangspunkt wird dabei stets die gleichmäßige Anordnung der Kröpfungen mit jeweils 72° Winkelabstand voneinander angenommen.

Es ist klar, daß aus den unterschiedlichen Winkelabständen der Kröpfungen unterschiedliche Zündabstände folgen. Als klein werden solche Winkel $\alpha$ und $\beta$ bezeichnet, bei denen dies ohne weiteres beherrschbar ist. Es ist jedoch offensichtlich, daß im Rahmen der Erfindung auch gewisse Kompromisse zwischen Massenausgleich und regelmäßigen Zündabständen eingegangen werden können, indem die Winkel $\alpha$ und $\beta$ etwas kleiner als für den vollständigen Massenausgleich erforderlich ausgeführt werden. Es treten dann zwar noch geringfügige Massenmomente oder auch Massenkräfte erster Ordnung auf, die jedoch in erträglichen Grenzen gehalten werden können.

Bei der Erfindung ist es besonders vorteilhaft , daß die an der Kurbelwelle angebrachten Gegengewichte für alle Zylinder gleich ausgeführt werden können und daß es auch nicht erforderlich ist, Kolben oder Pleuelstangen unterschiedlicher Massen zu verwenden. Es ist auch nicht erforderlich ungleiche Zylinderabstände vorzusehen. Somit kann die Maschine besonders einfach ausgebildet werden und es können weitgehend gleiche Teile eingesetzt werden. In einem solchen Fall wird ein vollständiger Ausgleich der Massenkräfte und Massenmomente erster Ordnung erreicht, wenn der Winkel $\alpha$ etwa 4,8° und der Winkel $\beta$ etwa 8,6° beträgt.

Die inneren Momente werden in bekannter Weise durch Ausgleichsgewichte verringert. Dies erfolgt beispielsweise durch Anordnung von zehn gleichartigen Ausgleichsgewichten mit einer Schwerpunktlage von jeweils 180° zur entsprechenden Kurbelkröpfung. Es ist jedoch auch jede andere Ausgleichsgewichtsanordnung möglich, die für sich gesehen keine freien rotierenden Kräfte und Momente ergibt, wie z.B. Ausgleichsgewichte mit Schwerpunktlagen in der Symmetrieebene, d.h., in der Ebene, die die Kurbelwellenachse enthält und durch die Kröpfung 3 geht und symmetrisch zu einer Achse, die senkrecht zur Kurbelwellenachse ist und die durch Kröpfung 3 geht.

Es ist im Rahmen der Erfindung jedoch durchaus möglich, die Massenkräfte und Massenmomente durch Verwendung von Kolben unterschiedlicher Masse zu beeinflussen. So können etwa an den den Kröpfungen 1 und 5 bzw. 2 und 4 zugeordneten Kolben oder Pleuel zusätzliche Massen vorgesehen werden. Es ist auch möglich, die Abstände zwischen den einzelnen Zylindern ungleich auszuführen. Auch in diesem Fall kann durch eine Kurbelwelle mit ungleicher Winkelteilung ein vollständiger Massenkräfte und Momentausgleich erfolgen, wobei lediglich die Winkel $\alpha$ und $\beta$ geringfügig variiert werden müssen. Der Winkel $\alpha$ wird in solchen Fällen maximal 8°, der Winkel $\beta$ maximal 12° betragen.

Bei Kurbelwellen mit fünf Kröpfungen, die gemäß dem Stand der Technik mit gleicher Winkelteilung $\alpha$ = 72° angeordnet sind, ergeben sich für den Fall der Reihenmaschine folgende freie Kräfte und Momente für die gesamte Maschine:

$$F_{osz1} = 0 \qquad\qquad M_{osz1} = 0.449 * m_o * r * w^2 * a$$

$$F_{osz2} = 0 \qquad\qquad M_{osz2} = 4.980 * m_o * r * w^2 * \backslash * a$$

$$F_{Rot} = 0 \qquad\qquad M_{Rot} = 0.449 * m * r * w^2 * a$$

Darin bedeutet:

$F_{osz1}$     Oszillierende Massenkraft 1. Ordnung
$F_{osz2}$     Oszillierende Massenkraft 2. Ordnung
$M_{osz1}$     Oszillierendes Massenmoment 1. Ordnung
$M_{osz2}$     Oszillierendes Massenmoment 2. Ordnung
$F_{Rot}$      Rotierende Massenkraft
$M_{Rot}$      Rotierendes Massenmoment
$m_o$          Oszillierende Masse pro Kurbelkröpfung
$m$            Rotierende Masse pro Kurbelkröpfung
$r$            Kurbelradius
$w$            Winkelgeschwindigkeit der Kurbelwelle
$\backslash$   Pleuelstangenverhältnis
$a$            Längsabstand zweier aufeinanderfolgender Kröpfungen.

Der beschriebene Ausgleichsgrad ergibt sich bei einer Kurbelwelle, bei der die Gegengewichte an allen Kurbeln identisch sind. Eine solche Kurbelwelle läßt sich verständlicherweise relativ einfach herstellen.

Bei langsam laufenden Maschinen läßt sich eine solche Kurbelwelle verwenden. Bei schneller laufenden Maschinen können die freien Momente $M_{Rot}$ und $M_{osz1}$ derart stören, daß sie verringert werden müssen. Dies wird nach dem Stand der Technik durch speziell errechnete unterschiedliche Gegengewichte erreicht, die an speziellen Anordnungspunkten der Kurbelarme vorzusehen sind. Dabei läßt sich $M_{osz1}$ jedoch nur im Falle einer Maschine mit zwei Zylinderreihen restlos kompensieren, die V-förmig im Winkel von 90° zueinander angeordnet sind. Bei einer Reihenmaschine ist für die Kompensation von $M_{osz1}$ die Anbringung von Massenausgleichswellen erforderlich.

Mit der erfindungsgemäßen Winkelanordnung der Kröpfungen läßt sich bei Vorsehen identischer Gegengewichte an den Kröpfungen der folgende Ausgleichsgrad erreichen:

$$F_{osz1} = 0 \qquad\qquad M_{osz1} = 0$$

$$F_{osz2} = 0.750 * m_o * r * w^2 * \backslash \qquad M_{osz2} = 4.701 * m_o * r * w^2 * \backslash * a$$

$$F_{Rot} = 0 \qquad\qquad M_{Rot} = 0$$

3

Dieser gute Ausgleichsgrad, bei dem insbesondere $M_{osz1}$ verschwindet, wird ohne zusätzliche Ausgleichswellen und trotz Verwendung identischer Ausgleichsgewichte an den einzelnen Kröpfungen erreicht. Die zusätzlich auftretende oszillierende Massenkraft 2. Ordnung wirkt sich nicht nachteilig aus, da sie vergleichsweise klein ist, und die Lagerung der Maschine bei einer Anordnung ohne Ausgleichswellen wegen des freien Massenmomentes $M_{osz2}$ ohnehin auf eine Schwingungsanregung der 2. Ordnung abgestimmt werden muß. Jedoch lassen sich durch Anbringen von zwei mit doppelter Kurbelwellendrehzahl gegenläufig rotierenden Ausgleichswellen in Verbindung mit der erfindungsgemäßen Kröpfungsanordnung alle im vorhergehenden beschriebenen freien Massenwirkungen 1. und 2. Ordnung vollständig kompensieren. Eine solche Maschine ist dann besonders für Anwendungsfälle geeignet, die eine starre Lagerung erfordern. Die geringe Änderung der Winkelstellung der Kurbelkröpfungen hat keine negativen Auswirkungen auf den Rundlauf des Motormomentes bzw. auf Torsionsschwingungen der Kurbelwelle. Bei Brennkraftmaschinen kann sowohl die Zündfolge (z.B. 1-2-4-5-3) als auch die Gruppierung der Auslaßkanäle beibehalten werden.

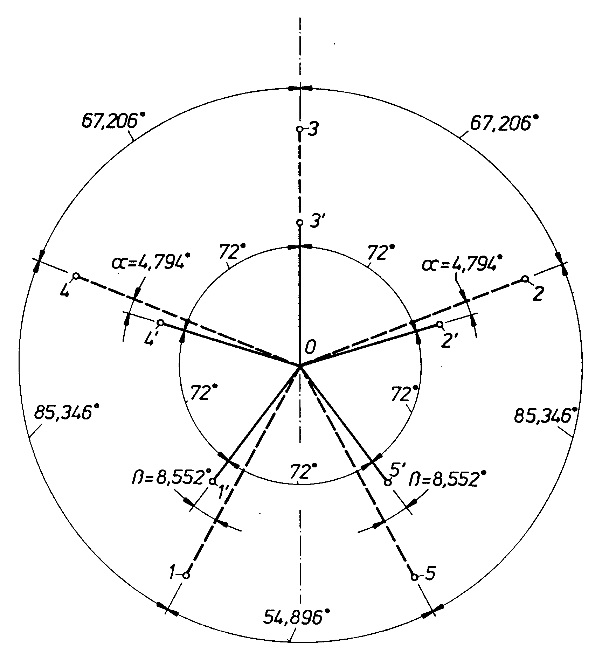

In der Zeichnung ist die Erfindung schematisch anhand einer axialen Projektion der Kurbelwelle dargestellt.

0 stellt die geometrische Achse der Kurbelwelle dar. Die voll ausgezogenen Linien 01', 04',03', 02' und 05' stellen die Winkelstellungen der Kröpfungen einer Kurbelwelle dar, auf der die Kröpfungen nacheinander in der Reihenfolge 1, 2, 3, 4 und 5 angeordnet sind, und in der die Winkelabstände zwischen den Kröpfungen jeweils den gleichen Wert von 72° haben.

Die erfindungsgemäße Winkelanordnung der Kröpfungen ist in der Fig. mit unterbrochenen Linien dargestellt. Am äußeren Kreis sind die Winkelabstände zwischen den Kröpfungen 1, 4, 3, 2 und 5 für den Fall eines vollständigen Ausgleichs der Massenkräfte und Massenmomente erster Ordnung dargestellt. Dabei wird von identischen Kolben und Pleuelstangen für alle Zylinder und von gleichen Zylinderabständen ausgegangen. Es ist ersichtlich, daß die mittleren Kröpfungen 2 und 4 jeweils um einen ersten Winkel $\alpha$ von der gleichmäßigen Stellung 2' und 4' abweichen, der in diesem Fall 4,794° beträgt. Die Kröpfungen 1 und 5 weichen um einen Winkel $\beta$ = 8,552° von den regelmäßigen Stellungen 1' und 5' ab.

## Patentansprüche

1. Kurbelwelle, insbesondere für einen Fünfzylinder-Reihenmotor, bei der fünf Kröpfungen in Richtung der Kurbelwellenachse gesehen, in der Reihenfolge 1, 4, 3, 2, 5 aufeinanderfolgen, wobei 1 und 5 die beiden äußeren Kröpfungen, 2 und 4 die beiden inneren Kröpfungen und 3 die mittlere Kröpfung darstellen und bei der die Kröpfungen 1, 2, 3, 4, 5 ungleichmäßig große Winkel zueinander einschließen, **dadurch gekennzeichnet**, daß der Winkel jeder der beiden inneren Kröpfungen 2 und 4 zur mittleren Kröpfung 3 um einen kleinen Winkel ($\alpha$) kleiner ist als 72° und daß der Winkel jeder der beiden äußeren Kröpfungen 1 und 5 zur mittleren Kröpfung 3 um einen zweiten kleinen Winkel ($\beta$) größer ist als 144°.

2. Kurbelwelle nach Anspruch 1, dadurch gekennzeichnet, daß der erste Winkel ($\alpha$) maximal 8° beträgt.

3. Kurbelwelle nach einem der Ansprüche 1 oder 2, **dadurch gekennzeichnet**, daß der zweite Winkel ($\beta$) maximal 12° beträgt.

4. Kurbelwelle nach Anspruch 1, **dadurch gekennzeichnet**, daß der erste Winkel ($\alpha$) etwa 4,8° und der zweite Winkel ($\beta$) etwa 8,6° beträgt.

## Claims

1. Crankshaft, in particular for a five-cylinder in-line engine, in which five crank webs are arranged in line in the order 1, 4, 3, 2, 5 as viewed in the direction of the crankshaft axis, 1 and 5 being the two outer webs, 2 and 4 the two inner webs and 3 the middle web, and in which said crank webs 1, 2, 3, 4, 5 are arranged at irregular angles to one another, characterised in that the angle of both of said inner webs 2 and 4 to said middle web 3 is less than 72° by an acute angle ($\alpha$) and that the angle of each of the two outer webs 1 and 5 to said middle web 3 exceeds 144° by a second acute angle ($\beta$).

2. Crankshaft according to Claim 1, characterised in that said first angle ($\alpha$) amounts to 8° at maximum.

3. Crankshaft according to one of Claims 1 or 2, characterised in that said second angle ($\beta$) amounts to 12° at maximum.

**4.** Crankshaft according to Claim 1, characterised in that said first angle ($\alpha$) amounts to about 4.8° and said second angle ($\beta$) amounts to about 8.6°.

**Revendications**

**1.** Vilebrequin, notamment pour un moteur à cinq cylindres en ligne, vilebrequin pour lequel, si l'on regarde en direction de l'axe de vilebrequin, cinq coudes se succèdent dans l'ordre 1, 4, 3, 2, 5, 1 et 5 étant les deux coudes externes, 2 et 4 les deux coudes internes et 3 le coude médian, et les coudes 1, 2, 3, 4, 5 délimitant entre eux des angles de grandeur différente, vilebrequin caractérisé en ce que l'angle de chacun des deux coudes internes 2 et 4 par rapport au coude médian 3 est inférieur à 72° d'un petit angle ($\alpha$), et en ce que l'angle de chacun des deux coudes externes 1 et 5 par rapport au coude médian 3, est supérieur à 144° d'un second petit angle ($\beta$).

**2.** Vilebrequin selon la revendication 1, caractérisé en ce que le premier angle ($\alpha$) est au maximum de 8°.

**3.** Vilebrequin selon une des revendications 1 ou 2, caractérisé en ce que le second angle ($\beta$) est au maximum de 12°.

**4.** Vilebrequin selon la revendication 1, caractérisé en ce que le premier angle ($\alpha$) est d'environ 4,8° tandis que le second angle ($\beta$) est d'environ 8,6°.